(19) **Europäisches Patentamt**
**European Patent Office**
**Office européen des brevets**

(11) **EP 2 983 326 A1**

(12) **EUROPEAN PATENT APPLICATION**
published in accordance with Art. 153(4) EPC

(43) Date of publication:
**10.02.2016 Bulletin 2016/06**

(21) Application number: **14870643.5**

(22) Date of filing: **02.12.2014**

(51) Int Cl.:
**H04L 9/32** (2006.01)

(86) International application number:
**PCT/CN2014/092826**

(87) International publication number:
**WO 2015/180441 (03.12.2015 Gazette 2015/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **26.05.2014 CN 201410225208**

(71) Applicant: **South China University Of Technology (SCUT)**
**Guangzhou, Guangdong 510640 (CN)**

(72) Inventors:
• **TANG, Shaohua**
**Guangzhou**
**Guangdong 510640 (CN)**
• **SHEN, Wuqiang**
**Guangzhou**
**Guangdong 510640 (CN)**

(74) Representative: **Price, Nigel John King**
**J A Kemp**
**14 South Square**
**Gray's Inn**
**London WC1R 5JJ (GB)**

(54) **HYBRID MULTIVARIATE DIGITAL SIGNATURE SYSTEM AND METHOD**

(57) A system of mixed multivariate digital signature is disclosed. The system includes a signature module configured to sign a message to be signed, and a verification module configured to verify a signature. The signature module includes a data input/output port, a single-pole double-throw switch, a processor, an affine transformation component, a random generator, a linear equations solving component, and an affine transformation inversion component. The verification module includes a data input/output port, a single-pole double-throw switch, a processor and a public key verification component. The system and its method disclosed, under choosing appropriate parameters, can resist known algebraic attacks of multivariate public key cryptosystems, such as the Separation Attack, the Rank Attack, the Direct Attack and the Exhaustive Search Attack, etc.. The security level of the system is greater than $2^{84}$, and its signing speed is quite fast.

Fig.1

**Description**

FIELD

The present disclosure relates generally to the field of information security, and particularly to a system and method of mixed multivariate digital signature.

BACKGROUND

As an important type of post quantum cryptography, a multivariate public key cryptosystem has a public key of a set of multivariate nonlinear polynomials over a finite field $F$. Its security relies on the NP-hardness of the problem to solve a system of multivariate nonlinear polynomial equations

The multivariate public key cryptosystem (including encryption and signature) can be mainly divided into bipolar system, mixed system and IP system.

At present, most of the multivariate public key cryptosystems are bipolar systems, and most of schemes are insecure. For example, the well-known MI system (also known as the $C*$ scheme) can be broken by the Linearization Equations Attack and Kipnis-Shamir Attack, while the basic Oil-Vinegar signature scheme can be broken by the Separation Attack, and the four-level Rainbow signature scheme can be broken by the High Rank Attack and the Separation Attack , with the PMI system being broken by the Differential Attack. In addition, mixed type schemes are extremely rare. There exists Dragon system and its variants. But they are insecure. The main reason why these existing multivariate public key cryptosystems are vulnerable to algebraic attacks is that there are structural problems or defects. In other words, the trapdoor functions on which they are based is insecure.

In view of the above, there is a need to provide a more secure digital signature system.

SUMMARY

To address the deficiencies and inadequacies in the art, it is an object of the present disclosure to provide a system of mixed multivariate digital signature. The system has a mixed structure that can overcome design deficiencies in existing systems, with high security and operation efficiency as well as applicability in authentication.

It is another object of the present disclosure to provide a method of mixed multivariate digital signature.

The objects of the invention are achieved by the following technical solutions.

A system of mixed multivariate digital signature includes:

A. a signature module, configured to sign a message to be signed, the signature module including a data input/output port, a single-pole double-throw switch (SPDT switch), a processor, an affine transformation component, a random generator, a linear equations solving component, and an affine transformation inversion component; the signature module is configured to work when the SPDT switch is in a second path: the processor stores message data transmitted from the input port and transmits the message data to the affine transformation component for affine transformation, then, the affine transformation component outputs data to trigger the random generator to generate a set of random numbers, and data output by the affine transformation component together with the set of random numbers are transmitted by the random generator to the linear equations solving component for linear equations operation; if the linear equations have no solution or multiple solutions, the data output by the affine transformation component will be continually returned to the random generator, once again triggering the random generator to generate a new set of random numbers until the linear equations solving component can generate only one solution; then, the linear equations solving component transmits the only one solution and the corresponding set of random numbers to the affine transformation inversion component for affine transformation inversion operation, the affine transformation inversion component generates a desired signature and transmits it to the processor, and the processor transmits the previously stored message data and the signature to an end user eventually, the entire process being scheduled by a scheduler in the processor; and

B. a verification module, configured to verify a signature, the verification module including a data input/output port, a SPDT switch, a processor and a public key verification component; the verification module is configured to work when the SPDT switch is in a first path: the processor stores data including message data and its signature data transmitted from the input port, and transmits the message data and its signature data to the public key verification component for verification operation; if the verification is successful, the public key verification component outputs "1" indicating that the signature is valid and returns it to the processor, otherwise, the public key verification component outputs "0" indicating that the signature is invalid and returns it to the processor, and the processor eventually outputs the "1" or "0" to an end user, the entire process being scheduled by a scheduler in the processor.

According to a further aspect of the disclosure, a method of mixed multivariate digital signature, including:

(1) signature process

a. receiving, storing and transmitting message data by a processor to an affine transformation component for affine transformation operation to generate a first data;

b. transmitting the first data to a random generator, and triggering the random generator to generate a set of random numbers;

c. transmitting, by the random generator, the first data together with the set of random numbers to a linear equations solving component for linear equations solving operation, and if the linear equations have no solution or multiple solutions, the data output by the affine transformation component will be continually returned to the random generator, once again triggering the random generator to generate a new set of random numbers, i.e. repeating steps b. and c. until the linear equations solving component can generate only one solution;

d. transmitting, by the linear equations solving component, the only one solution and the corresponding set of random numbers to an affine transformation inversion component for affine transformation inversion operation to generate a second data; and

e. returning the second data to the processor as a signature of the message data, and transmitting by the processor the previously stored message data and its signature to an end user;

(2) verification process

a. receiving, storing and transmitting the message data and its signature data by the processor to a public key verification component for verification operation, and the public key verification component outputting "1" or "0"; and

b. returning, by the public key verification component, the "1" or "0" to the processor, and the processor outputting "1" or "0" to an end user.

Specifically, the method of mixed multivariate digital signature includes the following steps.

(1) signature process.

a. receiving, storing and transmitting message data $Y' = (y_1',..., y_r') \in F^r$ by a processor to an affine transformation component for affine transformation operation $\tilde{Y} = (\tilde{y}_1,...,\tilde{y}_r) = S_1(Y')$ to generate a first data $\tilde{Y}$;

b. transmitting, by the affine transformation component, the first data $\tilde{Y} = (\tilde{y}_1,...,\tilde{y}_r)$ to a random generator to trigger the random generator to generates a set of random numbers $t_1',...,t_b' \in F$;

c. transmitting, by the random generator, the first data $\tilde{Y} = (\tilde{y}_1,..., \tilde{y}_r)$ generated by the affine transformation component together with the set of random numbers $t_1',...,t_b'$ to a linear equations solving component to solve linear equations $W(\tilde{y}_1,...,\tilde{y}_r,z_1,..., z_g,t_1',...,t_b') = (0,...,0)$ in the unknown $z_1,...,z_g$, and if the linear equations $W(\tilde{y}_1,...,\tilde{y}_r, z_1,...,z_g,t_1',...,t_b') = (0,...,0)$ have no solution or multiple solutions, the data $\tilde{Y} = (\tilde{y}_1,...,\tilde{y}_r)$ output by the affine transformation component will be continually returned to the random generator, triggering the random generator to generate a new set of random numbers $t_1',...,t_b' \in F$, i.e. repeating steps b. and c. until the linear equations solving component can obtain only one solution $Z'=(z_1',...,z_g')$;

d. transmitting, by the linear equations solving component, the only one solution $Z'=(z_1',...,z_g')$ and the corresponding set of random numbers $t_1',...,t_b'$ to an affine transformation inversion component for affine transformation inversion operation $X' = (x_1',...,x_{g+b}') = S_2^{-1}(z_1',...,z_g',t_1',...,t_b')$ to generate a second data $X' = (x_1',...,x_{g+b}')$; and

e. returning the second data $X' = (x_1',...,x_{g+b}')$ generated by the affine transformation inversion component to the processor as a signature of the message data, and transmitting by the processor the previously stored message $Y' = (y_1',..., y_r')$ and its signature $X' = (x_1',...,x_{g+b}')$ to an end user;

(2) verification process:

a. receiving, storing and transmitting the message data $Y' = (y_1',..., y_r')$ and its signature data $X' = (x_1',...,x_{g+b}')$ by the processor to a public key verification component for verification operation $\overline{W}(y_1',..., y_r', x_1',...,x_{g+b}') \overset{?}{=} (0,...,0)$, and if the equality holds, outputting "1" by the public key verification component, otherwise outputting "0"; and

b. returning, by the public key verification component, the "1" or "0" to the processor, and outputting the "1" or "0" by the processor to an end user, wherein "1" indicates that the signature is valid, and "0" indicates that the signature is invalid.

The following mathematical knowledge and tools are involved in the system and method of mixed multivariate digital signature of the present disclosure.

(1) Substantially, all of the operations in the system are based on a finite field $F$ with $q$ elements; $r$, $g$ and $b$ are positive integers, and $r + g + b = n$;

(2) Two invertible affine transformations: $S_1 : F^r \rightarrow F^r$ and $S_2 : F^{g+b} \rightarrow F^{g+b}$, and an invertible linear transformation: $S_3 : F^g \rightarrow F^g$;

(3) A central map: $W : F^n \rightarrow F^g$, which is given by

$$W(y_1,...,y_r,z_1,...,z_g,t_1,...,t_b) = (w_1,...,w_g),$$

here $w_1,...,w_g \in F[y_1,...,y_r,z_1,...,z_g,t_1,...,t_b]$, which are in the form of

$$w = \sum_{i=1}^{r}\sum_{i'=1}^{r} A_{ii'} y_i y_{i'} + \sum_{i=1}^{r}\sum_{j=1}^{g} B_{ij} y_i z_j + \sum_{i=1}^{r}\sum_{k=1}^{b} C_{ik} y_i t_k + \sum_{j=1}^{g}\sum_{k=1}^{b} D_{jk} z_j t_k + \sum_{k=1}^{b}\sum_{k'=1}^{b} E_{kk'} t_k t_{k'}$$

$$+ \sum_{i=1}^{r} G_i y_i + \sum_{j=1}^{g} H_j z_j + \sum_{k=1}^{b} L_k t_k + M,$$

$$A_{ii'}, B_{ij}, C_{ik}, D_{jk}, E_{kk'}, G_i, H_j, L_k, M \in F.$$

(4) A public key map: $\overline{W} : F^n \rightarrow F^g$, which is given by

$$\overline{W}(\overline{x}_1,...,\overline{x}_n) = S_3 \circ W \circ (S_1 \times S_2)(\overline{x}_1,...,\overline{x}_n) = (\overline{w}_1,...,\overline{w}_g), \quad \overline{w}_1,...,\overline{w}_g \in F[\overline{x}_1,...,\overline{x}_n];$$

(5) The private keys of the system are $S_1$, $S_2$, $S_3$ and the central map $W$.

(6) After system initialization, the data related to the above mappings are stored in a memory, and are controlled by a scheduler of the processor and dispatched to corresponding components for operating accordingly during the system engineering process.

Compared with the existing technologies, the present disclosure has the following advantages and benefits.

Firstly, most of the known multivariate public key cryptosystems are bipolar systems, which may be severely attacked due to the vulnerabilities or defects in their structure. In contrary, the present disclosure provides a mixed multivariate digital signature system, which mixes subtly each kind of variables in the system so as to be more complicated in structure, and thus can avoid algebraic attacks.

Secondly, there is a weakness in the known multivariate public key cryptosystems, that is, the trapdoor map has few quadratic cross terms. This often causes the system to be attacked due to structural vulnerabilities brought thereby. With regard to this, the present disclosure conceives a special and secure trapdoor map, which includes more quadratic cross terms in structure.

Thirdly, under choosing appropriate parameters, the system of the present disclosure can resist currently known algebraic attacks of multivariate public key cryptosystems, such as the Separation Attack, the Rank Attack, the Direct Attack, the Exhaustive Search Attack and so on. Its security level can be up to $2^{84}$.

Fourthly, the speeds of signing and verification of the system of the present disclosure are faster than most of the existing multivariate digital signature systems, including the technical solution disclosed in the Chinese Patent Application No. 201310425390.2 entitled SYSTEM AND

METHOD OF MULTIVARIATE PUBLIC KEY DIGITAL SIGNATURE/VERIFICATION. The

Magma implementation of the system of the present disclosure only takes 0.190 seconds to generate a signature on an ordinary 2.50 GHz workstation under secure parameters. This can easily meet the needs of efficient signature occasions.

Fifthly, the system of the present disclosure can create a signature with low power consumption, and is suitable for low-power devices, such as smart card, wireless sensor network and radio frequency identification.

Sixthly, the present disclosure can be used for authentication as an important part of an authentication system, such as identity or attribute identification, mutual or multi-party authentication and key exchange protocol, etc..

BRIEF DISCRIPTION OF THE DRAWINGS

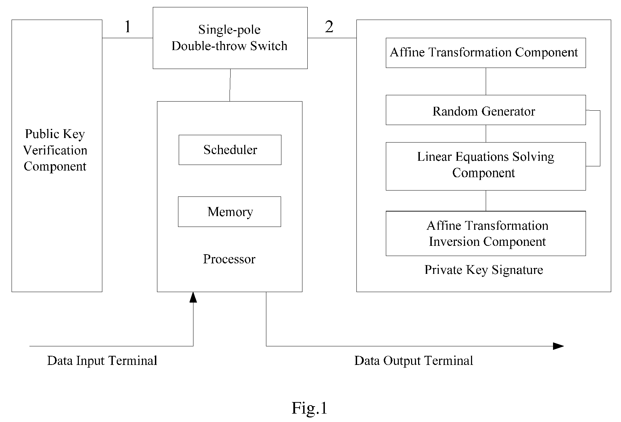

Fig.1 is a schematic diagram illustrating a system of mixed multivariate digital signature according to an embodiment of the present disclosure.

DETAILED DESCRIPTION OF THE PREFERRED EMBODIMENTS

In the following description of embodiments, reference is made to the accompanying drawings which form a part hereof, and in which it is shown by way of illustration specific embodiments of the disclosure that can be practiced.

As shown in Fig.1, a system of mixed multivariate digital signature includes:

A. a signature module, configured to sign a message to be signed, the signature module including a data input/output port, a single-pole double-throw switch (SPDT switch), a processor, an affine transformation component, a random generator, a linear equations solving component, and an affine transformation inversion component; the signature module is configured to work when the SPDT switch is in a second path: the processor stores message data transmitted from the input port and transmits the message data to the affine transformation component for affine transformation, then, the affine transformation component outputs data to trigger the random generator to generate a set of random numbers, and data output by the affine transformation component together with the set of random numbers are transmitted by the random generator to the linear equations solving component for linear equations operation; if the linear equations have no solution or multiple solutions, the data output by the affine transformation component will be continually returned to the random generator, once again triggering the random generator to generate a new set of random numbers until the linear equations solving component can generate only one solution; then, the linear equations solving component transmits the only one solution and the corresponding set of random numbers to the affine transformation inversion component for affine transformation inversion operation, the affine transformation inversion component generate a desired signature and transmits it to the processor, and the processor transmits the previously stored message data and the signature to an end user eventually, the entire process being scheduled by a scheduler in the processor; and

B. a verification module, configured to verify a signature, the verification module including a data input/output port, a SPDT switch, a processor and a public key verification component; the verification module is configured to work when the SPDT switch is in a first path: the processor stores data including message data and its signature data transmitted from the input port, and transmits the message data and its signature data to the public key verification component for verification operation; if the verification is successful, the public key verification component outputs "1" indicating that the signature is valid and returns it to the processor, otherwise, the public key verification component outputs "0" indicating that the signature is invalid and returns it to the processor, and the processor eventually outputs the "1" or "0" to an end user, the entire process being scheduled by a scheduler in the processor.

A method of mixed multivariate digital signature includes the following steps.

1. System Initialization

(1) A finite field $F = GF(7)$, that is, the field has 7 elements, $r = 3$, $g = 4$, $b = 2$ and $n = 9$ ;

(2) An invertible affine transformation $S_1 = \begin{pmatrix} 1 & 0 & 5 \\ 3 & 4 & 6 \\ 1 & 1 & 0 \end{pmatrix} \begin{pmatrix} x_1 \\ x_2 \\ x_3 \end{pmatrix} + \begin{pmatrix} 4 \\ 6 \\ 3 \end{pmatrix}$,

an invertible affine transformation $S_2 = \begin{pmatrix} 2 & 2 & 6 & 3 & 5 & 2 \\ 4 & 3 & 2 & 2 & 5 & 5 \\ 3 & 6 & 1 & 6 & 3 & 5 \\ 0 & 6 & 6 & 4 & 0 & 2 \\ 3 & 6 & 5 & 5 & 5 & 6 \\ 4 & 2 & 5 & 6 & 2 & 3 \end{pmatrix} \begin{pmatrix} x_1 \\ x_2 \\ x_3 \\ x_4 \\ x_5 \\ x_6 \end{pmatrix} + \begin{pmatrix} 3 \\ 0 \\ 2 \\ 4 \\ 0 \\ 4 \end{pmatrix}$,

and, an invertible linear transformation $S_3 = \begin{pmatrix} 5 & 3 & 2 & 3 \\ 0 & 5 & 3 & 5 \\ 5 & 2 & 4 & 6 \\ 5 & 1 & 5 & 0 \end{pmatrix} \begin{pmatrix} x_1 \\ x_2 \\ x_3 \\ x_4 \end{pmatrix}$;

(3) A central map $W = (w_1, w_2, w_3, w_4)$, where $w_1, w_2, w_3, w_4 \in F[x_1,...,x_9]$; for clarity, replace respectively $y_1$, $y_2$, $y_3$, $z_1$, $z_2$, $z_3$, $z_4$, $t_1$, $t_2$ by $x_1,...,x_9$ to obtain

$$w_1 = 4x_1x_2 + x_1x_5 + 3x_1x_6 + 5x_1x_7 + 2x_1x_8 + 2x_1x_9 + 5x_1 + 3x_2^2 + 4x_2x_3 + 3x_2x_4 + 4x_2x_5$$
$$+ 6x_2x_6 + 4x_2x_7 + 6x_2x_8 + 5x_2x_9 + 6x_2 + 4x_3^2 + 5x_3x_4 + 5x_3x_5 + 6x_3x_6 + 5x_3x_7$$
$$+ 5x_3x_8 + 5x_3x_9 + 4x_3 + 3x_4x_8 + 3x_4x_9 + 4x_4 + 4x_5x_8 + 4x_5x_9 + 5x_5 + 4x_6x_8 + 4x_6x_9$$
$$+ x_6 + x_7x_8 + 6x_7x_9 + 2x_7 + 4x_8^2 + 4x_8x_9 + 2x_8 + x_9^2 + 5x_9 + 4,$$

$$w_2 = 2x_1^2 + 4x_1x_2 + 3x_1x_3 + 4x_1x_4 + x_1x_5 + 3x_1x_6 + 4x_1x_7 + 2x_1x_9 + 5x_1 + 4x_2^2 + 3x_2x_3$$
$$+ 4x_2x_4 + 5x_2x_5 + 4x_2x_6 + x_2x_9 + x_2 + 3x_3^2 + 3x_3x_4 + 6x_3x_5 + 5x_3x_6 + 3x_3x_9 + 2x_3$$
$$+ x_4x_8 + 4x_4x_9 + 4x_4 + x_5x_8 + 2x_5x_9 + 3x_5 + x_6x_8 + 5x_6x_9 + 6x_6 + x_7x_8 + 4x_7x_9$$
$$+ 5x_7 + 5x_8^2 + 4x_8x_9 + 2x_8 + 5x_9^2 + 4x_9 + 1,$$

$$w_3 = x_1^2 + x_1x_2 + x_1x_3 + 2x_1x_4 + x_1x_5 + x_1x_6 + 4x_1x_7 + 2x_1x_8 + 5x_1x_9 + 2x_1 + 2x_2^2 + 4x_2x_3$$
$$+ 4x_2x_4 + 5x_2x_5 + x_2x_6 + 2x_2x_9 + 4x_2 + 5x_3^2 + 3x_3x_4 + x_3x_5 + 3x_3x_6 + 2x_3x_7 + 5x_3x_8$$
$$+ 6x_3x_9 + x_3 + 2x_4x_8 + 5x_4x_9 + 5x_4 + x_5x_9 + 6x_5 + x_6x_8 + 2x_6x_9 + 4x_6 + 2x_7x_8 + 4x_7$$
$$+ 3x_8^2 + 5x_8 + x_9^2 + 3x_9 + 1,$$

$$w_4 = x_1^2 + x_1x_2 + x_1x_3 + x_1x_5 + 2x_1x_6 + x_1x_7 + 5x_1x_8 + 6x_2^2 + 4x_2x_3 + 2x_2x_4 + 2x_2x_6$$
$$+ 6x_2x_7 + 2x_2x_8 + 5x_2x_9 + 4x_2 + 4x_3^2 + 6x_3x_4 + 5x_3x_5 + 3x_3x_6 + 4x_3x_7 + 6x_3x_8$$
$$+ 4x_3x_9 + 3x_3 + x_4x_8 + 2x_4x_9 + 4x_5x_9 + 5x_5 + 5x_6x_8 + 6x_6x_9 + 6x_6 + x_7x_9 + 4x_7$$
$$+ 4x_8^2 + 3x_8x_9 + 3x_8 + 6x_9^2 + 6x_9 + 5.$$

(4) It can be deduced from (1) to (3) that $\overline{W} = (\overline{w}_1, \overline{w}_2, \overline{w}_3, \overline{w}_4)$ is:

$$\overline{w}_1 = 5x_1^2 + 5x_1x_2 + 5x_1x_3 + 6x_1x_4 + 2x_1x_6 + 6x_1x_7 + 6x_1 + 2x_2^2 + 5x_2x_3 + 5x_2x_5 + 6x_2x_6$$
$$+ 3x_2x_7 + 3x_2x_8 + x_2 + 6x_3^2 + 6x_3x_4 + 2x_3x_5 + x_3x_6 + x_3x_7 + 6x_3x_8 + 5x_3x_9 + x_3 + 3x_4^2$$
$$+ 4x_4x_5 + 5x_4x_6 + 4x_4x_7 + 2x_4x_8 + 5x_4x_9 + 6x_5^2 + 2x_5x_7 + 3x_5x_8 + 5x_5x_9 + 2x_5 + 4x_6^2$$
$$+ 6x_6x_7 + 4x_6x_8 + 2x_6x_9 + 5x_6 + 3x_7^2 + 3x_7x_8 + x_7 + 2x_8^2 + 3x_8x_9 + 6x_8 + x_9^2 + 3x_9 + 6,$$

$$\overline{w}_2 = x_1^2 + 4x_1x_2 + 3x_1x_3 + x_1x_4 + 5x_1x_5 + 2x_1x_7 + 6x_1x_8 + 2x_1x_9 + 5x_1 + 5x_2x_3 + 4x_2x_4$$
$$+ 2x_2x_5 + 4x_2x_7 + 6x_2x_8 + 3x_2x_9 + 6x_2 + 2x_3^2 + 2x_3x_4 + x_3x_5 + 6x_3x_6 + 4x_3x_8 + x_3x_9$$
$$+ 4x_3 + x_4^2 + 4x_4x_5 + 3x_4x_6 + 6x_4x_7 + 3x_4x_8 + 5x_4x_9 + 3x_4 + 6x_5^2 + 2x_5x_6 + 6x_5x_7$$
$$+ 2x_5x_8 + x_6^2 + 6x_6x_7 + x_6x_8 + 4x_6x_9 + 6x_6 + x_7^2 + 2x_7x_8 + 2x_7x_9 + 4x_7 + 3x_8^2$$
$$+ 2x_8x_9 + 6x_8 + 6x_9^2 + 6x_9 + 2,$$

$$\overline{w}_3 = 5x_1x_2 + 4x_1x_3 + 3x_1x_4 + x_1x_6 + 4x_1x_8 + 4x_1x_9 + 3x_1 + 6x_2^2 + 5x_2x_4 + 2x_2x_5 + 5x_2x_6$$
$$+ 6x_2x_7 + 5x_2x_9 + x_2 + 3x_3^2 + 2x_3x_4 + 5x_3x_6 + 2x_3x_7 + 2x_3x_8 + x_3x_9 + 5x_3 + 2x_4^2$$
$$+ x_4x_5 + 2x_4x_6 + x_4x_7 + 4x_4x_9 + 3x_4 + 6x_5^2 + 4x_5x_8 + 2x_5x_9 + 2x_5 + 3x_6^2 + 2x_6x_7$$
$$+ 5x_6x_8 + 5x_6 + 3x_7^2 + 5x_7x_8 + 4x_7x_9 + 5x_7 + 3x_8^2 + 6x_8x_9 + x_8 + 3x_9^2 + 3x_9 + 3,$$

$$\overline{w}_4 = x_1^2 + 6x_1x_2 + 5x_1x_3 + 2x_1x_4 + 4x_1x_5 + 2x_1x_6 + 2x_1x_7 + 5x_1x_8 + 3x_1x_9 + 4x_1 + 5x_2^2$$
$$+ 2x_2x_3 + 2x_2x_4 + 4x_2x_5 + 5x_2x_6 + 4x_2x_7 + x_2x_8 + 5x_2x_9 + 5x_2 + 3x_3^2 + 3x_3x_4 + 4x_3x_5$$
$$+ x_3x_6 + x_3x_7 + 6x_3x_8 + 6x_3x_9 + 5x_3 + 4x_4^2 + 5x_4x_5 + 3x_4x_6 + x_4x_7 + 5x_4x_8 + 5x_4x_9$$
$$+ 4x_4 + 4x_5^2 + 6x_5x_6 + 2x_5x_7 + 6x_5x_8 + 5x_5 + 4x_6^2 + 5x_6x_7 + 3x_6x_8 + x_6x_9 + 5x_6 + 5x_7^2$$
$$+ 4x_7x_9 + 2x_7 + 5x_8^2 + 4x_8x_9 + 2x_8 + 6x_9^2 + x_9 + 3.$$

**2. Signature Process**

After system initialization, the signature operation to a message is available when the SPDT switch is in a second path. The whole signature process will now be explained in detail with reference to an example of message data $Y' = (3, 4, 6)$ :

a. Upon receiving the message data $Y' = (3, 4, 6)$, the processor stores and transmits the message data to an affine transformation component for affine transformation operation

$$S_1(3, 4, 6) = \begin{pmatrix} 1 & 0 & 5 \\ 3 & 4 & 6 \\ 1 & 1 & 0 \end{pmatrix}\begin{pmatrix} 3 \\ 4 \\ 6 \end{pmatrix} + \begin{pmatrix} 4 \\ 6 \\ 3 \end{pmatrix} = (2, 4, 3) = \widetilde{Y} \quad \text{to generate a first data } \widetilde{Y} = (2, 4, 3) ;$$

b. The first data $\tilde{Y}$ = (2,4,3) generated by the affine transformation component is transmitted to a random generator to trigger the random generator to generate a set of random numbers (1,2);

c. The random generator transmits the first data $\tilde{Y}$ = (2,4,3) generated by the affine transformation component together with the set of random numbers (1,2) to a linear equations solving component to solve linear equations $W(2,4,3,x_4,x_5,x_6,x_7,1,2)$ = (0,...,0), where $x_4,x_5,x_6,x_7$ are unknown variables, and the linear equations $W(2,4,3,x_4,x_5,x_6,x_7,1,2)$ = (0,...,0) have only one solution $Z'$ = (1,5,1,0);

d. The linear equations solving component transmits the solution $Z'$ = (1,5,1,0) and the corresponding set of random numbers (1,2) to an affine transformation inversion component for affine transformation operation inversion

$$S_2^{-1}(1,5,1,0,1,2) = \begin{pmatrix} 2 & 2 & 6 & 3 & 5 & 2 \\ 4 & 3 & 2 & 2 & 5 & 5 \\ 3 & 6 & 1 & 6 & 3 & 5 \\ 0 & 6 & 6 & 4 & 0 & 2 \\ 3 & 6 & 5 & 5 & 5 & 6 \\ 4 & 2 & 5 & 6 & 2 & 3 \end{pmatrix}^{-1} \times \begin{pmatrix} 1-3 \\ 5-0 \\ 1-2 \\ 0-4 \\ 1-0 \\ 2-4 \end{pmatrix} = (3,4,4,1,4,0) = X'$$

to generate a second data $X'$ = (3, 4, 4, 1, 4, 0) ;

e. The second data $X'$ = (3,4,4,1,4,0) generated by the affine transformation inversion component is returned to the processor as a signature of the message data, and the processor transmits the previously stored message data $Y'$ = (3,4,6) and its signature $X'$ = (3,4,4,1,4,0) to an end user.

3. Verification Process

When the SPDT switch is in a first path, verification operation to the message is available.

a. Upon receiving the message data $Y'$ = (3,4,6) and the signature data $X'$ = (3,4,4,1,4,0), the processor stores and transmits these data to a public key verification component for verification operation $\overline{W}(3,4,6,3,4,4,1,4,0) \overset{?}{=} (0,...,0)$ ; it is obvious that the equality holds, so the output of the public key verification component is "1";

b. The public key verification component returns the "1" to the processor, and the processor outputs the "1" to the end user to indicate that the signature is valid.

The above are simple embodiments of the present application and do not intend to limit the scope thereof. Any variations, modifications, alternations, combinations or simplifications that do not departing from the spirit and scope of the present application shall be within the protection of the present application as equivalents of the embodiments.

**Claims**

1. A system of mixed multivariate digital signature, comprising:

A. a signature module, configured to sign a message to be signed, the signature module including a data input/output port, a single-pole double-throw switch (SPDT switch), a processor, an affine transformation component, a random generator, a linear equations solving component, and an affine transformation inversion component; the signature module is configured to work when the SPDT switch is in a second path: the processor stores message data transmitted from the input port and transmits the message data to the affine transformation component for affine transformation, then, the affine transformation component outputs data to trigger the random generator to generate a set of random numbers, and data output by the affine transformation component together with the set of random numbers are transmitted by the random generator to the linear equations solving component for linear equations operation; if the linear equations have no solution or multiple solutions, the data output by the affine transformation component will be continually returned to the random generator, once again triggering the random generator to generate a new set of random numbers until the linear equations solving component can generate only one solution; then, the linear equations solving component transmits the only one solution and the corresponding set of random numbers to the affine transformation inversion component for affine transformation inversion operation, the affine transformation inversion component generates a desired signature and transmits it to the processor, and the processor transmits the previously stored message data and the signature to an end user eventually, the entire process being scheduled by a scheduler in the processor; and

B. a verification module, configured to verify a signature, the verification module including a data input/output port, a SPDT switch, a processor and a public key verification component; the verification module is configured to work when the SPDT switch is in a first path: the processor stores data including message data and its signature data transmitted from the input port, and transmits the message data and its signature data to the public key verification component for verification operation; if the verification is successful, the public key verification component outputs "1" indicating that the signature is valid and returns it to the processor, otherwise, the public key verification component outputs "0" indicating that the signature is invalid and returns it to the processor, and the processor eventually outputs the "1" or "0" to an end user, the entire process being scheduled by a scheduler in the processor.

2. A method of mixed multivariate digital signature, comprising:

(1) signature process

a. receiving, storing and transmitting message data by a processor to an affine transformation component for affine transformation operation to generate a first data;

b. transmitting the first data to a random generator, and triggering the random generator to generate a set of random numbers;

c. transmitting, by the random generator, the first data together with the set of random numbers to a linear equations solving component for linear equations solving operation, and if the linear equations have no solution or multiple solutions, the first data output by the affine transformation component will be continually returned to the random generator, once again triggering the random generator to generate a new set of random numbers, i.e. repeating steps b. and c. until the linear equations solving component can generate only one solution;

d. transmitting, by the linear equations solving component, the only one solution and the corresponding set of random numbers to an affine transformation inversion component for affine transformation inversion operation to generate a second data; and

e. returning the second data to the processor as a signature of the message data, and transmitting by the processor the previously stored message data and its signature to an end user;

(2) verification process

a. receiving, storing and transmitting the message data and its signature data by the processor to a public key verification component for verification operation, and the public key verification component outputting "1" or "0"; and

b. returning, by the public key verification component, the "1" or "0" to the processor, and the processor outputting "1" or "0" to an end user.

3. The method of claim 2, wherein the method further comprises the steps of:

(1) signature process:

a. receiving, storing and transmitting message data $Y' = (y_1',..., y_r') \in F^r$ by a processor to an affine transformation component for affine transformation operation $\tilde{Y} = (\tilde{y}_1,...,\tilde{y}_r) = S_1(Y')$ to generate a first data $\tilde{Y}$;

b. transmitting, by the affine transformation component, the first data $\tilde{Y} = (\tilde{y}_1,...,\tilde{y}_r)$ to a random generator to trigger the random generator to generates a set of random numbers $t_1',...,t_b' \in F$;

c. transmitting, by the random generator, the first data $\tilde{Y} = (\tilde{y}_1,...,\tilde{y}_r)$ generated by the affine transformation component together with the set of random numbers $t_1',...,t_b'$ to a linear equations solving component to solve linear equations $W(\tilde{y}_1,...,\tilde{y}_r,z_1,...,z_g,t_1',...,t_b') = (0,...,0)$ in the unknown $z_1,...,z_g$, and if the linear equations $W(\tilde{y}_1,...,\tilde{y}_r,z_1,...,z_g,t_1',...,t_b') = (0,...,0)$ have no solution or multiple solutions, the first data $\tilde{Y} = (\tilde{y}_1,...,\tilde{y}_r)$ output by the affine transformation component will be continually returned to the random generator, triggering the random generator to generate a new set of random numbers $t_1',...,t_b' \in F$, i.e. repeating steps b. and c. until the linear equations solving component can obtain only one solution $Z' = (z_1',...,z_g')$ ;

d. transmitting, by the linear equations solving component, the only one solution $Z'=(z_1',...,z_g')$ and the corresponding set of random numbers $t_1',...,t_b'$ to an affine transformation inversion component for affine transformation inversion operation $X' = (x_1',...,x_{g+b}') = S_2^{-1}(z_1',...,z_g',t_1',...,t_b')$ to generate a second data $X'=(x_1',...,x_{g+b}')$; and

e. returning the second data $X'=(x_1',...,x_{g+b}')$ generated by the affine transformation inversion component to the processor as a signature of the message data, and transmitting by the processor the previously stored message data $Y' = (y_1',..., y_r')$ and its signature $X' = (x_1',...,x_{g+b}')$ to an end user;

(2) verification process:

a. receiving, storing and transmitting the message data $Y' = (y_1',..., y_r')$ and its signature data $X'=(x_1',..., x_{g+b}')$ by the processor to a public key verification component for verification operation $\overline{W}(y_1',...,y_r',x_1',...,x_{g+b}')=(0,...,0)$, and if the equality holds, outputting "1" by the public key verification component, otherwise outputting "0"; and

b. returning, by the public key verification component, the "1" or "0" to the processor, and outputting the "1" or "0" by the processor to an end user, wherein "1" indicates that the signature is valid, and "0" indicates that the signature is invalid.

Fig.1

# INTERNATIONAL SEARCH REPORT

| International application No. |
| --- |
| **PCT/CN2014/092826** |

**A. CLASSIFICATION OF SUBJECT MATTER**

H04L 9/32 (2006.01) i

According to International Patent Classification (IPC) or to both national classification and IPC

**B. FIELDS SEARCHED**

Minimum documentation searched (classification system followed by classification symbols)

H04L 9

Documentation searched other than minimum documentation to the extent that such documents are included in the fields searched

Electronic data base consulted during the international search (name of data base and, where practicable, search terms used)

CNTXT, CNKI: multivariate, MPKC, public key, signature, password, authentication, equation, solution, unique, one, random

VEN: multi?vari +, public key, MPKC, equation, signature, verification, solution, solve, random

**C. DOCUMENTS CONSIDERED TO BE RELEVANT**

| Category* | Citation of document, with indication, where appropriate, of the relevant passages | Relevant to claim No. |
| --- | --- | --- |
| PX | CN 104009848 A (SOUTH CHINA UNIVERSITY OF TECHNOLOGY), 27 August 2014 (27.08.2014), claims 1-3 | 1-3 |
| A | CN 103780383 A (SOUTH CHINA UNIVERSITY OF TECHNOLOGY), 07 May 2014 (07.05.2014), claims 1-9 | 1-3 |
| A | CN 103501226 A (XIDIAN UNIVERSITY), 08 January 2014 (08.01.2014), the whole document | 1-3 |
| A | CN 103516526 A (XIDIAN UNIVERSITY), 15 January 2014 (15.01.2014), the whole document | 1-3 |
| A | US 2013329883 A1 (KRYPTNOSTIC), 12 December 2013 (12.12.2013), the whole document | 1-3 |

☐ Further documents are listed in the continuation of Box C.     ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 12 February 2015 (12.02.2015) | **26 February 2015 (26.02.2015)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **ZHENG, Chunyu** Telephone No.: (86-10) **62411300** |
| --- | --- |

Form PCT/ISA/210 (second sheet) (July 2009)

## INTERNATIONAL SEARCH REPORT
Information on patent family members

| International application No. |
| --- |
| **PCT/CN2014/092826** |

| Patent Documents referred in the Report | Publication Date | Patent Family | Publication Date |
| --- | --- | --- | --- |
| CN 104009848 A | 27 August 2014 | None | |
| CN 103780383 A | 07 May 2014 | None | |
| CN 103501226 A | 08 January 2014 | None | |
| CN 103516526 A | 15 January 2014 | None | |
| US 2013329883 A1 | 12 December 2013 | None | |

Form PCT/ISA/210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 201310425390